(19) Europäisches Patentamt
European Patent Office
Office européen des brevets

(11) **EP 2 247 840 B1**

(12) **EUROPEAN PATENT SPECIFICATION**

(45) Date of publication and mention
of the grant of the patent:
**01.05.2019 Bulletin 2019/18**

(51) Int Cl.:
*F02D 31/00* *(2006.01)*          *F02D 41/24* *(2006.01)*

(21) Application number: **09718195.2**

(86) International application number:
**PCT/FI2009/050173**

(22) Date of filing: **02.03.2009**

(87) International publication number:
**WO 2009/109702 (11.09.2009 Gazette 2009/37)**

(54) **SPEED CONTROLLER FOR PISTON ENGINE**

DREHZAHLSTEUERUNGSGERÄT FÜR EINEN KOLBENMOTOR

RÉGULATEUR DE VITESSE POUR MOTEUR À PISTON

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **03.03.2008 FI 20085202**

(43) Date of publication of application:
**10.11.2010 Bulletin 2010/45**

(73) Proprietor: **Wärtsilä Finland Oy**
**65100 Vaasa (FI)**

(72) Inventor: **PENSAR, Johan**
**FI-65230 Vaasa (FI)**

(74) Representative: **Berggren Oy, Helsinki & Oulu**
**P.O. Box 16**
**Eteläinen Rautatiekatu 10A**
**00101 Helsinki (FI)**

(56) References cited:
**EP-A- 0 597 232**          **EP-A- 1 411 232**
**US-A1- 2006 011 167**     **US-A1- 2007 057 512**

**Description**

**Field of technology**

The invention relates to a speed controller for a piston engine. The invention particularly relates to a speed controller for a ship piston engine.

**Prior art**

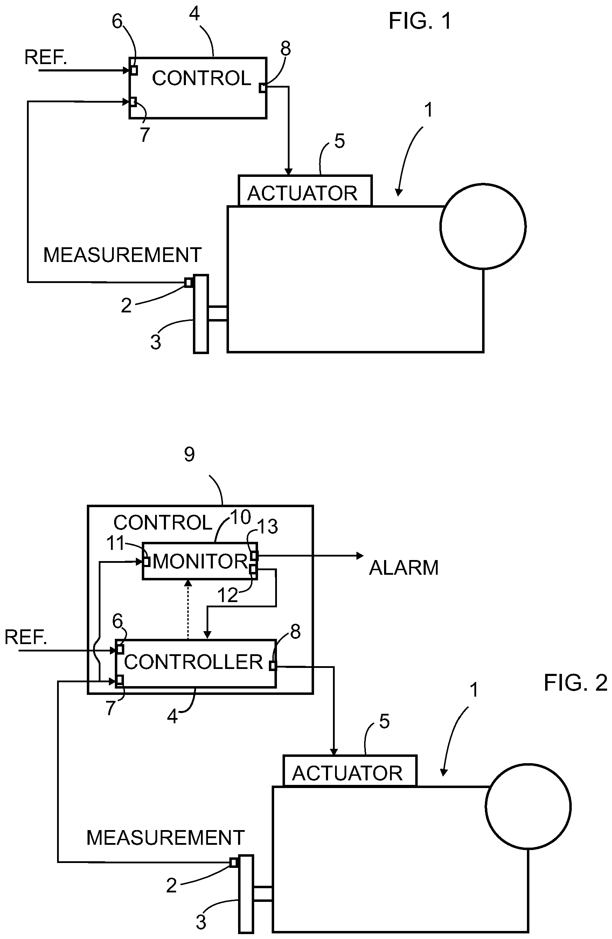

Figure 1 illustrates an example of a prior art speed controller 4 for a piston engine 1. The speed of the piston engine's main shaft, more precisely the rotational speed, is measured using sensor 2 on the flywheel 3, for example. The measurement data from the sensor is forwarded to the speed controller 4, which compares the measured speed with the reference speed. On the basis of this comparison, the speed controller issues control signals to an actuator or actuators 5 in the engine in order to adjust the engine speed (more precisely the rotational speed of the engine's main shaft) to a desired value known as the reference speed value. The speed controller comprises a first interface 6 for receiving reference data (the reference signal), a second interface 7 for receiving measurement data (the measurement signal), and a third interface 8 for transmitting a control signal to the actuator. The actuator is usually a valve regulating the quantity of fuel supplied into the engine, or the control signal may control the cylinder-specific fuel injectors.

US 20060011167 discloses a known PI controller wherein two feedback loops are used to provide two difference signals into the controller.

A speed controller is required to keep the engine speed at the desired value and within the desired range. If there is no speed controller, the engine speed may deviate from the intended operating range, and this may lead to engine damage. A speed controller normally uses a PID algorithm. The controller is usually tuned so that the engine speed would deviate as little as possible with changing engine load, and that the engine speed would not oscillate at a stable speed. If the controller is tuned to respond rapidly to changes in engine load, the engine speed will easily oscillate at even load - that is, when operating the engine at a stable speed. On the other hand, if the controller is tuned to completely or almost completely eliminate oscillation of the engine speed at a stable speed, the controller will be slow to respond to changes in engine load.

Even if these two criteria could be sufficiently accounted for in the tuning of the controller, the tuning would only operate appropriately under the conditions prevalent at the time of tuning. In practice, the conditions prevalent in an engine change for many reasons, such as wear and tear of the engine's mechanical components, variations in engine load, variations in the quality of fuel, variations in environmental conditions, changes in the temperature of a flexible coupling linked to the engine shaft, etc. When conditions change, engine control becomes either more oscillatory or slower.

Attempts have been made to account for changes in conditions by using tables for different conditions that can be used to re-tune the controller appropriately. However, all of the underlying factors cannot be measured in practice and thus accounted for in the tables; an example of this is mechanical wear and tear. Another method is to model the entire engine system, which requires profound knowledge of the system process. In practice, information is either nonexistent or not available.

Therefore a PID controller (or other type of controller) must be tuned in practice without more detailed informational or theoretical support. Generally speaking, an oscillating engine constitutes a serious problem because oscillation speeds up wear and tear on the engine. In installations with a large engine (such as large ships), the engine is usually linked to the load (ship's generator, ship's propeller) through a flexible coupling. The coupling attenuates the natural oscillation of the engine, caused by crankshaft rotation. Crankshaft oscillation is due to the nonsimultaneous power strokes of the pistons connected to the crankshaft, which provide energy from the consumption of fuel. The flexible coupling is dimensioned to bear the normal oscillation and power of the engine.

The oscillation caused by the operation of the engine speed controller is substantially larger in magnitude compared to the engine's natural oscillation. The situation is particularly severe when the frequencies of the engine's natural oscillations and the oscillations caused by control occur at the resonant frequency of the engine system (engine, coupling and system main shaft with load). The resonant system may damage system components. The flexible coupling is a component that will be likely to break.

Oscillation caused by control thus imposes additional stress on the flexible coupling. Additional stress increases the temperature of the internals of the coupling, which reduces its service life and, at worst, may cause damage to the coupling. Breakdown of the flexible coupling during operation may correspondingly cause damage to the engine and/or load.

**Short description of invention**

The objective of the invention is to reduce oscillations in the rotational speed of an engine caused by the speed controller. The objective will be achieved through a speed controller for controlling the speed of a piston engine according to claim 1. The piston engine speed controller of the present invention can analyse the oscillations it is causing and take the necessary action on this basis.

## List of figures

In the following, the invention is described in more detail by reference to the enclosed drawings, where

Figure 1 illustrates an example of a prior art speed controller,
Figure 2 illustrates an example of a speed controller according to the invention,
Figure 3 illustrates an example of the monitoring section of a speed controller according to the invention.

## Description of the invention

Figure 2 illustrates an example of an embodiment 9 of the invention. The speed controller 9 according to the invention comprises a speed controller section 4 (controller) and a monitoring section 10. The controller 4 is a normal speed controller of any known controller type, such as PID controller etc. The controller 4 has a first interface 6 for receiving reference data, a second interface 7 for receiving measurement data of the engine speed (more precisely the rotational speed), and a third interface 8 for transmitting a control signal to control the speed of the piston engine. The controller section 4 is arranged to generate said control signal in response to the received measurement data and reference data.

The purpose of the monitoring section 10 is to monitor the responses in engine speed caused by the actions of the speed controller 4. The monitoring section comprises a fourth interface 11 for receiving measurement data of the engine speed, a fifth interface 12 for transmitting a control change signal to the controller 4, and a sixth interface 13 for transmitting a message regarding the response in engine speed caused by controller operation. The monitoring section is thus arranged to generate a control change signal to control the controller 4 through the fifth interface 12 as necessary, and to generate a message regarding the response caused by controller operation for transmission through the sixth interface 13 as necessary.

The message to be transmitted is an alarm of a certain level or a message of a lower level. The message shall be received, for example, at a separate monitoring centre where a supervisor can react to the message as considered appropriate.

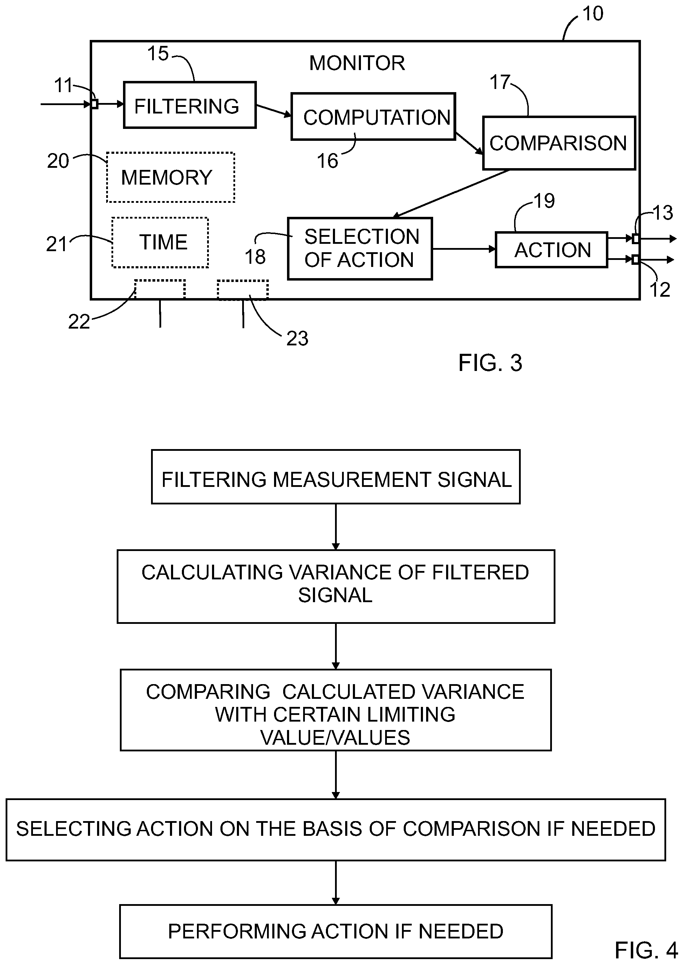

Figure 3 illustrates the monitoring section 10 in more detail. The monitoring section 10 comprises a filter 15 for filtering the highest frequencies and the direct current component from the measurement data signal, a computation element 16 for calculating the values corresponding to a certain quantity or quantities from the filtered measurement data signal, a comparison element 17 for comparing the calculated values with a certain limit or limits, a selection element 18 for selecting the appropriate action on the basis of the comparison, and action elements 19 for carrying out the selected action(s).

The filter section 15 can be, for example, an analogue low-pass filter or a digital filter such as a FIR filter. The implementation of the filter section, like the other sections, depends on the intended way of constructing the monitoring section - with analogue components or digital components.

The computation element 16 is arranged to calculate the values of a quantity or quantities. The computation element (16) calculates the variance value. Variance represents deviation of the signal in relation to its expected value. Variance is normally defined as follows:

$$\mathrm{var}(X) = E((X - \mu)^2) \qquad (1)$$

in which X is the observed value of the variable at a certain observation point, and $\mu$ is the expected value of X (normally the average). $(X - \mu)$ thus constitutes the difference between the variable's value at the observation point and the expected value. In practice, Formula (1) means that the average of the squares of the differences constitutes the expected value of deviation, also known as the variance. There are naturally also other ways of determining variance.

The engine's natural oscillations cause variance in the engine speed compared to a completely non-oscillating speed. Uneven wear on the engine's cylinder also increases variance in engine speed. Thus the variance value is dependent on the quantity of oscillation and therefore the state of the engine. Conventional variance values in different states of the engine can be determined in advance.

The operation of the controller 4 causes high variance values for engine speed. A comparison of the variance values calculated by the monitoring section 10 with predetermined conventional variance values makes it possible to conclude whether controller operation has caused oscillations in engine speed to a harmful extent. The comparison element 17 compares the calculated variance with predetermined values. A comparison can be made by comparing the values with each other or by calculating the difference of the values. On the basis of the comparison, the selection element chooses the way of action. If the value stored in advance is less than the calculated value, the generation of a message and/or control signal is chosen. There may be several values stored in advance, and the action chosen may depend on how many stored values are exceeded by the calculated value. The stored values can thus serve as limits, and certain actions will be taken when the limits are exceeded. The limits can be set so that the monitoring section 10 will not be too sensitive to control the operation of the controller section 4. If the difference between the calculated value and stored value is used for comparison, the magnitude of the difference is the criterion for choosing the way of action.

The way of action (operations) can be chosen as follows, for example:

a) choosing to generate a message if the calculated value exceeds the lowest stored value (small difference between values),
b) choosing to generate a control signal if the calculated value exceeds the second lowest value (medium difference between values),
c) choosing to generate an alarm-level message and a control signal to stop the engine if the calculated value exceeds the highest stored value (large difference between values).

As is evident from the example, many kinds of messages and control signals can be generated. Messages and control signals can be used separately or jointly to generate a way of action. The action elements 19 are arranged to generate the chosen control change signal to control the speed controller 4 and to generate a message regarding the response caused by controller operation. The action elements can be a single entity or one consisting of several parts.

Time information concerning the time when the controller 4 has executed a control action and when the variance value was calculated is used. In this embodiment, the monitoring section also comprises a timing arrangement 21 arranged to provide time information (for time stamps) to other parts of the controller, and a seventh interface 22 to receive information of each control action executed by the controller 4. In this case the computation element 16 is arranged to attach a time stamp to the calculated value, and an appropriate part of the monitoring section 10, such as the interface 22, is arranged to attach a time stamp to the action data of the controller 4. The comparison element 17 and the selection element 18 are arranged to utilise said time stamps to select action. If the time stamp of calculated variance is close to the time stamp of control action by the controller 4, accounting for the time constants of the engine and controller, it can be concluded more precisely that control action has caused oscillation in engine speed.

In practice, the presented embodiments also contain section-specific memory capacity or a separate memory 20 that stores necessary information (values stored in advance, information on control actions executed by the controller 4, values of calculated quantities and time stamps attached to data).

The controller section 4 must also have an arrangement for sending information on control action to the monitoring section 10. The arrangement can be a separate interface through which said data is forwarded to the seventh interface in the monitoring section, or the control change signal can also be forwarded to the monitoring section. The dotted line in Figure 2 illustrates this arrangement.

Figures 2 and 3 illustrate embodiments of the invention in very simplified form. It shall be kept in mind that practical embodiments can be implemented in several different ways and may contain parts and functions not illustrated in Figures 2 and 3.

For example, the monitoring section can be implemented so that at least the computation element 16, the comparison element 17 and the selection element 18 are software entities intended to be executed in the monitoring section's processing unit. The software entity may be a separate program or a subpart of a larger program. The monitoring section 10 in its entirety may also be a circuit board, such as a circuit board comprising an ASIC (Application Specific Integrated Circuit). The elements illustrated in Figure 3 can be separate parts or integrated into a single entity. There are thus different alternatives and combinations for implementing the monitoring section.

The monitoring section may also comprise an eighth interface 23 through which the monitoring section can be reconfigured as necessary.

The speed controller according to the invention is able to analyse the dynamic behaviour of the controller and engine in a simple and reliable way and to distinguish between engine speed oscillations caused by controller operation and the natural oscillations of the engine. No complex and detailed modelling of the engine needs to be known. The invention is well-suited to be used as a speed controller for ship engines. The invention can be implemented as a PID controller or other type of controller.

**Claims**

1. A speed controller (4) for controlling the speed of a piston engine, said speed controller comprising a first interface (6) for receiving reference data, a second interface (7) for receiving measurement data on engine speed, and a third interface (8) for transmitting a control signal to control the speed of the piston engine, and said speed controller being arranged to generate said control signal in response to the received measurement data and reference data, wherein the speed controller comprises a monitoring section (10) for monitoring the responses in engine speed caused by the speed controller (4), said monitoring section comprising a fourth interface (11) for receiving measurement data of the engine speed, and a fifth interface (12) for transmitting a control change signal to the controller (4), said monitoring section (10) being arranged to generate a control change signal to control the speed controller (4) through the fifth interface (12),
characterized in that the monitoring section (10) further comprises a sixth interface (13) for transmitting an alarm message to a monitoring centre regarding the response in engine speed caused by controller operation,
and in that the monitoring section (10) further comprises a filter (15) for filtering the highest frequencies and the direct signal component from the measurement data signal, a computation element (16) for calculating values corresponding to a certain quantity or quantities from the filtered measurement data signal, a comparison element (17) for comparing the calculated values with a certain limit or limits, a selection element (18) for selecting a generation of the control change signal on the basis of the comparison, and action elements (19) for carrying out the selected generation of the control change signal, wherein the calculated values are variance values, the monitoring section (10) further comprising a seventh interface (22) for receiving information of each control action executed by the controller (4), and the controller (4) comprises an arrangement for transmitting information of said each control action to the seventh interface,
and in that the computation element (16) is arranged to attach a time stamp to the calculated value, and the monitoring section is arranged to attach a second time stamp to the said each received control action data,
and the comparison element (17) and the selection element (18) are arranged to utilise said time stamps to select said generation of the control change signal.

2. A controller according to Claim 1, characterised in that the action elements (19) are arranged to generate said control change signal to control the speed controller (4) and to generate a message regarding the response caused by controller operation.

3. A controller according to Claim 2, characterised in that the control change signal being generated is arranged to change the reference data used by the controller.

4. A controller according to any of the Claims from 2 to 3, characterised in that the controller comprises a timing arrangement (21) arranged to provide time information to other parts of the controller.

5. A controller according to any of the Claims 2 to 4, characterised in that it comprises memory.

6. A controller according to any of the Claims 2 to 5, characterised in that at least the computation element (16), the comparison element (17) and the selection element (18) are software entities.

7. A controller according to any of the Claims 1 to 5, characterised in that the monitoring section (10) is a circuit board.

8. A controller according to any of the Claims 1 to 7, characterised in that the speed controller is a PID controller.

9. A controller according to any of the Claims 1 to 8 characterised in that the monitoring section is arranged to generate a message regarding the response caused by controller operation for transmission through the sixth interface (13).

**Patentansprüche**

1. Drehzahlsteuerung (4) zur Steuerung der Drehzahl eines Kolbenmotors, die Drehzahlsteuerung umfassend eine erste Schnittstelle (6) zum Empfang von Referenzdaten, eine zweite Schnittstelle (7) zum Empfang von Messdaten zur Motordrehzahl und eine dritte Schnittstelle (8) zur Übertragung eines Steuersignals, um die Drehzahl des Kolbenmotors zu steuern, und wobei die Drehzahlsteuerung eingerichtet ist, das Steuersignal in Reaktion auf die empfangenen Messdaten und Referenzdaten zu erzeugen, wobei die Drehzahlsteuerung einen Überwachungsabschnitt (10) zur Überwachung der Reaktionen der Motordrehzahl umfasst, die von der Drehzahlsteuerung (4) bewirkt werden, der Überwachungsabschnitt umfassend eine vierte Schnittstelle (11) zum Empfang von Messdaten der Motordrehzahl, und eine fünfte Schnittstelle (12) zur Übertragung eines Steuerungsänderungssignals an die Steuerung (4),

wobei der Überwachungsabschnitt (10) eingerichtet ist, ein Steuerungsänderungssignal zu erzeugen, um die Drehzahlsteuerung (4) durch die fünfte Schnittstelle (12) zu steuern,

**dadurch gekennzeichnet, dass** der Überwachungsabschnitt (10) ferner eine sechste Schnittstelle (13) zur Übertragung einer Alarmnachricht an ein Überwachungszentrum hinsichtlich der Reaktion der Motordrehzahl, die von dem Betrieb der Steuerung bewirkt wird, umfasst,

und dadurch, dass der Überwachungsabschnitt (10) ferner einen Filter (15) zur Filterung der höchsten Frequenzen und der Direktsignalkomponente aus dem Messdatensignal umfasst, ein Berechnungselement (16) zur Berechnung von Werten, die ein bestimmten Menge oder Mengen aus dem gefilterten Messdatensignal entsprechen, ein Vergleichselement (17) zum Vergleichen der berechneten Werte mit einer bestimmten Grenze oder Grenzen, ein Auswahlelement (18) zur Auswahl einer Erzeugung des Steuerungsänderungssignals auf Grundlage des Vergleichs, sowie Aktionselemente (19) zur Durchführung der ausgewählten Erzeugung des Steuerungsänderungssignals, wobei die berechneten Werte Varianzwerte sind,

der Überwachungsabschnitt (10) ferner umfassend eine siebte Schnittstelle (22) zum Empfang von Informationen jeder Steuerungsaktion, die von der Steuerung (4) ausgeführt wird, und die Steuerung (4) eine Einrichtung zur Übertragung von Informationen jeder Steuerungsaktion an die siebte Schnittstelle umfasst,

und dadurch, dass das Berechnungselement (16) eingerichtet ist, einen Zeitstempel an den berechneten Wert anzubringen, und der Überwachungsabschnitt eingerichtet ist, einen zweiten Zeitstempel an jeder empfangenen Steuerungsaktionsangabe anzubringen,

und das Vergleichselement (17) und das Auswahlelement (18) eingerichtet sind, die Zeitstempel zu nutzen, um die Erzeugung des Steuerungsänderungssignals auszuwählen.

2. Steuerung nach Anspruch 1, **dadurch gekennzeichnet, dass** die Aktionselemente (19) eingerichtet sind, das Steuerungsänderungssignal zu erzeugen, um die Drehzahlsteuerung (4) zu steuern und eine Nachricht hinsichtlich der Reaktion, die von dem Betrieb der Steuerung bewirkt wird, zu erzeugen.

3. Steuerung nach Anspruch 2, **dadurch gekennzeichnet, dass** das Steuerungsänderungssignal, das erzeugt wird, eingerichtet ist, die Referenzdaten zu ändern, die von der Steuerung genutzt werden.

4. Steuerung nach einem der Ansprüche 2 bis 3, **dadurch gekennzeichnet, dass** die Steuerung eine Zeitgebereinrichtung (21) umfasst, die eingerichtet ist, Zeitinformationen anderen Teilen der Steuerung bereitzustellen.

5. Steuerung nach einem der Ansprüche 2 bis 4, **dadurch gekennzeichnet, dass** sie Speicher umfasst.

6. Steuerung nach einem der Ansprüche 2 bis 5, **dadurch gekennzeichnet, dass** zumindest das Berechnungselement (16), das Vergleichselement (17) und das Auswahlelement (18) Softwareeinheiten sind.

7. Steuerung nach einem der Ansprüche 1 bis 5, **dadurch gekennzeichnet, dass** der Überwachungsabschnitt (10) eine Platine ist.

8. Steuerung nach einem der Ansprüche 1 bis 7, **dadurch gekennzeichnet, dass** die Drehzahlsteuerung eine PID-Steuerung ist.

9. Steuerung nach einem der Ansprüche 1 bis 8, **dadurch gekennzeichnet, dass** der Überwachungsabschnitt eingerichtet ist, eine Nachricht hinsichtlich der Reaktion, die von dem Betrieb der Steuerung bewirkt wird, zur Übertragung durch die sechste Schnittstelle (13) zu erzeugen.

## Revendications

1. Commande de vitesse (4) pour commander la vitesse d'un moteur à pistons, ladite commande de vitesse comprenant une première interface (6) pour recevoir des données de référence, une seconde interface (7) pour recevoir des données de mesure sur la vitesse du moteur, et une troisième interface (8) pour transmettre un signal de commande pour commander la vitesse du piston à moteur, et ladite commande de vitesse étant agencée pour générer ledit signal de commande en réponse aux données de mesure et aux données de référence reçues, dans lequel la commande de vitesse comprend une section de contrôle (10) pour contrôler les réponses en vitesse du moteur provoquées par la commande de vitesse (4), ladite section de contrôle comprend une quatrième interface (11) pour recevoir des données de mesure de la vitesse du moteur, et une cinquième interface (12) pour transmettre un signal de changement de commande à la commande (4), ladite section de contrôle (10) étant agencée pour générer un signal de changement de commande pour commander la commande de vitesse (4) par le biais de la cinquième interface (12), **caractérisée en ce que** la section de contrôle (10) comprend en outre une sixième interface (13) pour transmettre un message d'alarme vers un centre de contrôle concernant la réponse en vitesse du moteur provoquée par le fonctionnement de la commande et **en ce que** la section de contrôle (10) comprend en outre un filtre (15) pour filtrer les fréquences les plus élevées et le composant de signal direct du signal de données de mesure, un élément de calcul (16) pour calculer les valeurs correspondant à une certaine quantité ou des quantités venant du signal de données de mesure filtré, un élément de comparaison (17) pour comparer les valeurs calculées à une certaine limite ou des limites, un élément de sélection (18) pour sélectionner une génération du signal de changement de commande en se basant sur la comparaison, et des éléments d'action (19) pour exécuter la génération sélectionnée du signal de changement de commande, dans lequel les valeurs calculées sont des valeurs de variance,

la section de surveillance (10) comprenant en outre une septième interface (22) pour recevoir des informations de chaque action de commande exécutée par la commande (4), et la commande (4) comprend un agencement pour transmettre des informations de ladite action de commande à la septième interface,

et **en ce que** l'élément de calcul (16) est agencé pour fixer un horodateur à la valeur calculée, et la section de surveillance est agencée pour fixer un second horodateur auxdites chaque données d'action de commande reçues, et l'élément de comparaison (17) et l'élément de sélection (18) sont agencés pour utiliser lesdits horodateurs pour sélectionner ladite génération du signal de changement de commande.

2. Commande selon la revendication 1, **caractérisée en ce que** les éléments d'action (19) sont agencés pour générer ledit signal de changement de commande pour commander la commande de vitesse (4) et pour générer un message concernant la réponse provoquée par le fonctionnement de la commande.

3. Commande selon la revendication 2, **caractérisée en ce que** le signal de changement de commande en train d'être généré est agencé pour changer les données de référence utilisées par la commande.

4. Commande selon l'une quelconque des revendications 2 à 3, **caractérisée en ce que** la commande comprend un agencement d'horloge (21) agencé pour fournir des informations de temps à d'autres parties de la commande.

5. Commande selon l'une quelconque des revendications 2 à 4, **caractérisée en ce qu'**elle comprend une mémoire.

6. Commande selon l'une quelconque des revendications 2 à 5, **caractérisée en ce qu'**au moins l'élément de calcul (16), l'élément de comparaison (17) et l'élément de sélection (18) sont des entités logicielles.

7. Commande selon l'une quelconque des revendications 1 à 5, **caractérisée en ce que** la section de contrôle (10) est une carte de circuit imprimé.

8. Commande selon l'une quelconque des revendications 1 à 7, **caractérisée en ce que** la commande de vitesse est une commande PID.

9. Commande selon l'une quelconque des revendications 1 à 8, **caractérisée en ce que** la section de contrôle est agencée pour générer un message concernant la réponse provoquée par le fonctionnement de la commande pour la transmission par le biais de la sixième interface (13) .

FIG. 1

FIG. 2

EP 2 247 840 B1

FIG. 3

FILTERING MEASUREMENT SIGNAL

CALCULATING VARIANCE OF FILTERED SIGNAL

COMPARING  CALCULATED VARIANCE WITH CERTAIN LIMITING VALUE/VALUES

SELECTING ACTION ON THE BASIS OF COMPARISON IF NEEDED

PERFORMING ACTION IF NEEDED

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060011167 A